**Europäisches Patentamt**

(19) **European Patent Office**

**Office européen des brevets**

(11) Numéro de publication: **0 121 462**
**B1**

(12) **FASCICULE DE BREVET EUROPÉEN**

(45) Date de publication du fascicule du brevet:
**04.11.87**

(21) Numéro de dépôt: **84400535.5**

(22) Date de dépôt: **15.03.84**

(51) Int. Cl.⁴: **B 64 C 27/82,** B 64 C 27/46,
B 64 C 27/48, B 64 C 11/26,
F 01 D 5/28

(54) **Hélice multipale à pas variable à pales en matériaux composites démontables individuellement.**

(30) Priorité: **18.03.83 FR 8304448**

(43) Date de publication de la demande:
**10.10.84 Bulletin 84/41**

(45) Mention de la délivrance du brevet:
**04.11.87 Bulletin 87/45**

(84) Etats contractants désignés:
**DE GB IT**

(56) Documents cité:
**EP-A-0 019 047**
**DE-A-2 541 998**
**DE-B-2 455 810**
**FR-A-2 430 354**
**GB-A-1 302 857**
**US-A-3 765 267**
**US-A-4 302 155**
**US-A-4 332 525**

(73) Titulaire: **AEROSPATIALE Société Nationale Industrielle, 37, Boulevard de Montmorency, F-75781 Paris Cédex 16 (FR)**

(72) Inventeur: **Mouille, René Louis Villa la Pinède, Chemin du Moulin de Testas Le Coton Rouge, F-13100 Aix- en- Provence (FR)**
Inventeur: **Declercq, Marc, Vieux chemin de Lambesc, F-13330 Pelisane (FR)**
Inventeur: **Jalaguier, Jean- Pierre, rue du Soleil, F-13127 Vitrolles (FR)**
Inventeur: **Jaugey, Bernard, Clos des Orfeuilles, F-13012 Marseille (FR)**

(74) Mandataire: **Lepeudry- Gautherat, Thérèse, ARMENGAUD JEUNE CABINET LEPEUDRY 6, rue du Fg. St- Honoré, F-75008 Paris (FR)**

LIBER, STOCKHOLM 1987

## Description

La présente invention concerne les hélices multipales, et se rapporte plus précisément à une hélice multipale à pas variable, destinée en particulier à être utilisée comme rotor arrière d'un giravion, tel qu'un hélicoptère, sur lequel le rotor arrière peut être caréné.

L'invention se rapporte également à une pale et à un procédé de fabrication de cette pale, laquelle est particulièrement destinée à l'équipement d'une hélice multipale.

Des hélices multipales à pas variable, utilisables comme rotors arrière de type caréné pour hélicoptères sont décrites dans le brevet français 1 593 008 et dans la demande de brevet français n° 78 20 258 (FR-A-2 430 354) au nom de la Demanderesse.

Dans le brevet français 1 593 008, chacune des pales de l'hélice multipale est reliée par un élément radial allonge, torsible autour de son axe longitudinal à un moyeu entraîné en rotation par un arbre de rotor autour de l'axe de l'hélice, et un emboîtement du pied de chaque pale dans le moyeu permet à la fois la rotation de la pale autour de son axe longitudinal et un faible mouvement angulaire de la pale en battement et en trainée, tandis que, pour la commande de l'incidence, le pied de chaque pale comporte un maneton relié, par une articulation à rotule, à un plateau perpendiculaire à l'axe de l'hélice et mobile axialement.

Une telle hélice, montée comme rotor arrière, compensateur du couple d'entraînement d'un hélicoptère, dans une fenêtre ou veine délimitée verticalement dans la partie arrière du fuselage ou dans l'empennage vertical de l'hélicoptère par un carénage, est très avantageuse dans la mesure où elle apporte une grande sécurité lors des évolutions de l'hélicoptère près du sol, et qu'en raison du carénage à l'intérieur duquel tourne l'hélice, les pales de cette dernière sont soumises à des contraintes plus faibles que celles d'un rotor arrière classique, non caréné, ce qui augmente leur durée de vie.

Cependant, une telle hélice multipale présente un certain nombre d'inconvénients. En particulier, ces pales sont réalisées en métal léger. Elles sont donc sujettes à la corrosion, à l'érosion, et à la fatigue due aux contraintes alternées. De plus, l'usinage des pales est long et délicat et donc coûteux, et ceci d'autant plus que, non seulement la partie pleine de la pale soumise aux efforts aérodynamiques doit être réalisée avec un profil et une loi de vrillage précis, exactement reproductibles d'une pale à l'autre, en étant protégée au niveau du bord d'attaque par la mise en oeuvre d'un procédé de durcissement superficiel tel qu'une anodisation dure, mais que le pied de pale est également délicat et coûteux à réaliser.

En effet, le pied de pale comporte d'une part, une partie intermédiaire creuse, dans laquelle sont usinés un évidement axial destiné à recevoir l'extrémité radiale externe équipée d'une douille, de l'élément allongé reliant la pale au moyeu, et un alèsage transversal débouchant dans l'évidement axial et destiné à recevoir un axe passant dans la douille et assurant l'attache du pied de pale sur l'élément allongé, et d'autre part, un palier d'extrémité cylindrique, dont la surface extérieure est superficiellement durcie par chromage ou anodisation et dont la partie centrale est amincie, et qui est destiné à autoriser la rotation de la pale autour de son axe longitudinal, pour la commande du pas.

A cet effet, ce palier cylindrique est monté coulissant et tournant dans un manchon radial en matière synthétique relativement souple et à faible coefficient de frottement, qui est encastré sur environ la moitié de sa longueur située du côté de l'axe de l'hélice dans un alésade cylindrique radial usiné dans le moyeu, et libre vers l'extérieur, chaque manchon étant retenu en place par une collerette qui vient se loger dans une gorge correspondante dans l'alésage et immobilisé en rotation par un pion traversant la paroi de l'alésage. Afin de réaliser un tel montage du pied de pale, qui constitue une sorte de semi-encastrement sur le moyeu, il est indispensable que ce dernier présente une jante ayant une épaisseur radiale importante, de sorte que les alésages cylindriques suffisamment longs puissent être percés dans cette jante pour servir de logement aux manchons, ce qui est désavantageux sur le plan du poids, du coût de fabrication et des efforts centrifuges qui sollicitent cette importante masse excentrée constituée de deux flasques circulaires boulonnées l'une sur l'autre.

De plus, le disque ou fond du moyeu, qui relie la jante du moyeu à l'arbre du rotor en étant solidarisé à une bride radiale de ce dernier par une couronne de boulons, doit être d'une épaisseur en correspondance avec l'épaisseur de la jante, et ceci d'autant plus qu'en raison du montage des pieds de pale sur le moyeu, ce dernier est sollicité en flexion ainsi d'ailleurs que les boulons de fixation du moyeu à l'arbre, car ces derniers servent simultanément à la fixation sur l'arbre de la partie radiale interne des éléments allongés de liaison des pales au moyeu. Le moyeu ne sert donc pas uniquement à transmettre le couple moteur de l'arbre du rotor aux pales, mais il est activement sollicité par des efforts que lui transmettent les pales et les éléments allongés de liaison, jusque dans sa partie solidarisée à l'arbre du rotor, et il doit donc être dimensionné en conséquence.

Par ailleurs, le maneton de liaison du pied de chaque pale au plateau mobile axialement pour commander l'incidence est constitué par un levier latéral, solidaire de l'extrémité radiale interne du palier cylindrique, et portant un axe muni d'une bague sphérique en élastomère qui s'adapte juste à l'intérieur de l'oeil d'une chape axiale solidaire du pourtour radial du plateau mais rien ne retient positivement la bague élastique dans l'oeil de la chape.

Enfin, l'élément allongé et torsible reliant chaque pale à la partie centrale du moyeu entourant l'arbre du rotor est constitué par l'une des branches d'un organe en forme d'étoile comportant autant de branches que l'hélice comporte de pales, toutes les branches étant solidaires les unes des autres par un anneau plat central de cet organe, par lequel cet organe entoure l'arbre du rotor et est solidarisé à ce dernier par la couronne de boulons. Cet organe en étoile est réalisé en superposant plusieurs disques en tôle d'acier mince qui sont découpés en étoile, de sorte que chaque branche est formée par un faisceau de lames minces accolées, les lames de l'extérieur du faisceau étant d'une largeur inférieure à celles des lames intérieures, afin de répartir uniformément les contraintes de torsion entre les différentes lames qui sont de plus enduites d'un revêtement plastique anti-friction, afin d'éviter les corrosions de contact.

Cet organe métallique en forme d'étoile, dont la réalisation doit être soignée, et qui est donc coûteux, est très sollicité et il doit être régulièrement changé après un certain temps de fonctionnement ou s'il a subi une avarie.

Il en résulte qu'une telle hélice multipale est un organe dont le coût de fabrication et d'entretien est relativement élevé.

Dans la demande de brevet français n° 78 20 258, la Demanderesse a décrit une hélice multipale à pas variable d'un type simplifié, qui remédie à un certain nombre d'inconvénients attachés à la réalisation présentée ci-dessus et qui concernent essentiellement la durée de vie limitée de composants essentiels, tels que l'organe en forme d'étoile et les pales, ainsi que l'architecture génèrale complexe de l'hélice multipale.

Dans l'hélice multipale faisant l'objat de la demande de brevet français n° 78 20 258, deux pales diamétralement opposées sont essentiellement constituées d'une part par un longeron commun, réalisé par une unique lame allongée en fibres à haute résistance mécanique agglomérées par une résine synthétique, la lame étant assujettie par son milieu à un moyeu et, d'autre part, par deux coquilles à profil aérodynamique fixées à la lame de part et d'autre du moyeu, l'extrémité intérieure de chaque coquille étant solidaire d'un organe de commande de l'incidence de la pale correspondante, lequel est aménagé de façon à exercer sur la coquille un couple de torsion centré sur l'axe longitudinal de la lame allongée. Cette dernière est formée de deux faisceaux plats de fibres, lesquels sont disposés de façon à ménager au milieu de la lame une ouverture autorisant le libre passage d'un axe de commande collective de l'incidence de toutes les pales, cet axe étant, comme cela est le cas dans la réalisation décrite dans le brevet français 1 593 008, monté coulissant axialement dans l'arbre du rotor qui est tubulaire. De plus, la coquille de chaque pale est réunie sur toute sa longueur à la partie correspondante de la lame par une masse de matière synthétique adhésive cellulaire ou en mousse, de faible densité et présentant éventuellement une certaine élasticité résiduelle. Chaque coquille est essentiellement formée par des couches de tissus en fibres de verre et par un bord d'attaque en tôle d'acier inoxydable, l'ensemble étant aggloméré par une résine synthétique polymérisée de façon à intégrer le bord d'attaque dans les couches de tissus.

L'organe de commande de l'incidence est constitué par un manchon moulé en matière synthétique chargée de fibres de verre et qui est solidarisé au pied de chaque pale. Une portée, constituée par un anneau circulaire métallique, est noyée dans ou collée sur l'extrémité cylindrique interne du manchon, coaxialement à l'axe longitudinal de la pale, et un doigt métallique de commande du pas est noyé dans un bras latéral porté par l'extrémité interne du manchon. Par sa portée, chaque pale est montée tournante dans un palier en matière auto-lubrifiante moulée, reposant dans des évidements semi-circulaires ménagés à la périphérie d'une part d'un carter annulaire en forme de cuvette, solidaire du moyeu de l'hélice et de son arbre d'entraînement et d'autre part d'un capot qui surmonte le carter. L'extrémité de l'axe de commande collective de l'incidence des pales, qui traverse le moyeu, porte un plateau sensiblement perpendiculaire à cet axe et auquel sont fixées des paires de pattes munies de trous destinés à l'engagement des doigts de commande des manchons de deux pales voisines.

Cette réalisation a pour avantages que la structure du dispositif de commande de l'incidence est très simple, et que chaque pale est également d'une structure simple, robuste et légère, pratiquement insensible aux phénomènes d'érosion et à "l'effet d'entailles", de sorte que leur durée de vie est pratiquement illimitée. L'hélice multipale ainsi réalisée est d'un prix de revient bien plus faible et elle est beaucoup plus légère que les hélices à pales métalliques. De plus ses frais d'entretien sont bien moins élevés.

Cependant, il arrive qu'au cours d'atterrissages ou de décollages sur des aires non préparées, des pierres pénètrent dans la veine dans laquelle tourne l'hélice et dégradent des pales de celle-ci, à la suite de quoi il est nécessaire de démonter ces pales afin de procéder à leur réparation et/ou leur remplacement. Mais comme les pales sont agencées par paires de pales opposées, ayant, pour chaque paire, une lame allongée commune, il faut au minimum démonter une paire de pales pour chaque pale détériorée. Cette opération est extrêmement complexe car le moyeu de l'hélice est formé par un empilement collé comprenant, en superposition, les parties médianes de toutes les lames allongées ainsi que deux couches extérieures de tissus de fibres de verre imprégnées d'une résine synthétique polymérisée, l'ensemble de l'empilement étant noyé dans une matière synthétique de remplissage, et le moyeu ainsi constitué étant fixé à l'arbre d'entraînement tubulaire du rotor par des paires de boulons qui traversent le pourtour de l'empilement collé, de part et d'autre de la partie médiane de chaque lame allongée.

Il en résulte un inconvénient majeur au démontage d'une paire de pales, qui ne peut être réalisé qu'en décollant l'empilement qui constitue le moyeu. Ceci ne peut se faire qu'en atelier, après avoir enlevé le capot et désaccouplé de l'arbre du rotor l'ensemble des pales et du moyeu ainsi que le carter, et les pales des pattes du plateau de commande du pas, et après avoir désaccouplé ce plateau de l'axe de commande collective du pas, afin de déposer l'hélice proprement dite.

Afin de ne pas immobiliser l'hélicoptère au sol pendant une période prolongée, il est nécessaire de remonter une hélice de rechange, ce qui suppose que l'exploitant dispose d'une telle hélice de rechange. L'obligation de remplacer l'ensemble des pales et du moyeu dès que l'une des pales est endommagée implique, dans cette réalisation également, des immobilisations financières importantes.

Enfin, cette réalisation doit obligatoirement comporter un nombre pair de pales, puisque ces dernières sont solidarisées deux à deux par des longerons communs, ce qui est désavantageux, car les hélices multiples utilisées comme rotor arrière de type caréné ont un niveau sonore plus faible lorsqu'elles comportent un nombre impair de pales.

Par la présente invention, on se propose, tout en conservant les avantages que présente la seconde réalisation décrite ci-dessus par rapport à la première, de remédier aux inconvénients de cette seconde réalisation, grâce à une hélice multipale dont l'architecture générale permet le montage, le démontage et l'entretien aisés et rapides des différents composants de l'hélice, et notamment de ses pales, de préférence en nombre impair, et qui, lorsqu'elles présentent une structure propre à l'invention, améliorent la fiabilité et diminuent la vulnérabilité de l'hélice multipale qu'elles équipent.

Par rapport à l'état de la technique selon le document FR-A-2 430 354 qui décrit déjà une hélice multipale à pas variable destinée en particulier à être utilisée comme rotor arrière d'un giravion, et comprenant:

- un arbre central entraîné en rotation autour d'un axe central,

- un moyeu solidaire en rotation de l'arbre central autour de cet axe,

- des pales, de préférence en nombre impair, comportant chacune:

. une coque à profil aérodynamique constituée d'au moins une couche de tissus de fibres à haute résistance mécanique rigidifiée par une résine synthétique d'imprégnation polymérisée, et dont l'extrémité intérieure se prolonge par un pied de pale,

. un corps de remplissage en une matière synthétique cellulaire ou en mousse disposé dans la coque,

. un longeron d'axe longitudinal parallèle à celui de la pale et constitué par une unique lame allongée en fibres à haute résistance mécanique agglomérées par une résine synthétique polymérisée, dont la majeure partie est fixée dans la coque et dont une partie d'extrémité, sortant de la coque en traversant le pied de pale, forme une partie d'emplanture torsible et flexible par laquelle le longeron est rattaché au moyeu,

et telles que le pied de pale est solidaire d'un organe de commande de l'incidence, qui est destiné à exercer sur la coque un couple de torsion, sensiblement centré sur l'axe longitudinal du longeron, lorsque cet organe est sollicité par un ensemble de commande collective de l'incidence des pales, cet organe étant de plus monté en rotation dans le moyeu autour de l'axe longitudinal de la pale correspondante, l'invention se caractérise en ce que chaque pale est individuellement rattachée au moyeu par la partie d'emplanture du longeron, qui est aménagée en boucle entourant par son extrémité interne une unique bobine d'attache boulonnée sur le moyeu, et en ce que l'organe de commande de l'incidence de chaque pale est monté en rotation dans deux ouvertures circulaires coaxiales, centrées chacune sur l'axe longitudinal de la pale correspondante en étant éspacées radialement l'une de l'autre et ménagées chacune dans l'un de deux supports solidaires du moyen.

Une telle hélice permet un entretien plus facile dans la mesure où toute pale endommagée peut être rapidement démontée et changée sans qu'il soit nécessaire de démonter d'autres composants de l'hélice. En effet, chaque bobine d'attache est de préférence axialement traversée par la tige à extrémité filetée d'un unique goujon de liaison de la bobine à une partie radiale annulaire et plate du moyeu, entourant une ouverture centrale ménagée dans ce dernier pour autoriser la disposition coaxiale du moyeu autour de l'arbre central.

Avantageusement, deux couronnes rigides radiales et plates sont disposées de part et d'autre de toutes les bobines des différentes pales et autour de l'arbre central, et présentent chacune, pour chaque bobine, un perçage destiné à être aligné avec le passage central de la bobine correspondante et à recevoir la tige de l'unique goujon de liaison de la bobine au moyeu, afin de répartir les efforts centrifuges d'une bobine d'attache à l'autre. En transmettant les efforts de l'une des bobines à l'autre, ces couronnes permettent de ne pas solliciter en flexion la tige de l'unique goujon de liaison de la bobine d'une pale au moyeu.

Afin d'assurer un bon appui de la pale sur le moyeu, ce dernier présente avantageusement la forme d'une cuvette comportant deux parois cylindriques coaxiales radialement écartées l'une de l'autre et dans chacune desquelles est percée, pour chaque pale de l'hélice, l'une des deux ouvertures dans chacune desquelles l'organe de commande de l'incidence de la pale correspondante est monté en rotation par l'intermédiaire d'une bague auto-lubrifiante coaxiale à l'ouverture dans laquelle la bague est logée.

Le montage de l'organe de commande de pale peut s'effectuer dans de bonnes conditions si les diamètres internes de l'ouverture percée dans la paroi radiale interne du moyeu et de la bague auto-lubrifiante logée dans cette ouverture sont inférieurs respectivement aux diamètres internes de l'ouverture percée dans la paroi radiale externe du moyeu et de la bague auto-lubrifiante logée dans cette dernière ouverture, l'organe de commande de l'incidence de la pale correspondante présentant deux portées circulaires coaxiales centrées sur l'axe longitudinal de la pale, radialement écartées l'une de l'autre de sorte que sa portée radiale externe, dont le diamètre externe correspond au diamètre interne de la bague radiale externe et par sa portée radiale interne, dont le diamètre externe correspond au diamètre interne de la bague radiale interne, cet organe puisse prendre appui respectivement à l'intérieur des bagues radiales externe et interne.

Afin d'assurer une bonne liaison avec le pied de la pale, cet organe de commande de l'incidence est de préférence un palier en forme de manchon, traversé par la partie d'emplanture du longeron de la pale, coiffant le pied de pale et solidarisé à ce dernier, par exemple par collage, et dont chacune des extrémités est entourée par l'une des deux portées.

Si le pied de pale comprend un cylindre creux dont l'extrémité interne est de forme tronconique et une zone de transition reliant le cylindre creux à la coque de la pale, le manchon comprend, dans une forme de réalisation particulièrement bien adaptée à sa coopération avec le pied de pale, une partie cylindrique externe de grand diamètre entourant le cylindre creux du pied de pale et raccordée par une partie tronconique intermédiaire, par laquelle le manchon s'appuie contre l'extrémité interne tronconique du cylindre creux, à une partie cylindrique interne de petit diamètre.

Dans le cas où le manchon est métallique et d'une seule pièce, il est avantageux que les deux portées soient constituées chacune par l'une de deux collerettes de forme sphèroïde sur la surface externe des extrémités du manchon.

Afin de réduire les efforts radiaux sur les bagues auto-lubrifiantes, il est avantageux que l'organe de commande de l'incidence comporte également, entre ses deux portées écartés l'une de l'autre au maximum, un bossage latéral relié par une articulation à rotule à l'une des pattes axiales, en nombre égal au nombre de pales, d'un plateau de commande de l'incidence déplacé axialement parallèlement à l'axe de rotation, par un arbre de commande collective de l'incidence monté coulissant axialement dans l'arbre central qui est tubulaire.

Avantageusement, l'hélice comprend de plus un manchon d'entraînement, destiné à transmettre le couple moteur de l'arbre central au moyeu, et entourant l'arbre central en étant coaxial à ce dernier et solidaire en rotation de ce dernier, ce manchon d'entraînement comportant une bride radiale externe et annulaire de solidarisation à une partie radiale annulaire du moyeu.

Dans ce cas, la solidarisation de la bride du manchon d'entraînement à la partie annulaire du moyeu peut être assurée avantageusement par les goujons qui, régulièrement répartis autour de l'axe de rotation et en nombre égal au nombre de pales de l'hélice, assurent chacun simultanément la retenue, sur cette partie annulaire du moyeu, d'une bobine d'attache de la partie d'emplanture du longeron d'une pale.

Si l'entraînement de l'arbre central est assuré par des cannelures externes de ce dernier, par lesquelles il est en prise d'une part avec des cannelures internes d'un pignon moteur et d'autre part avec des cannelures internes du manchon d'entraînement, qui est séparé du pignon par un porte-joint, il est avantageux, fin d'éviter les jeux axiaux, les vibrations et la détérioration des éléments de l'empilement axial que constituent le manchon d'entraînement, le porte-joint et le pignon moteur, qu'un dispositif de précontrainte axial permette de maintenir une force axiale d'appui prédéterminée du manchon d'entraînement contre le porte-joint et contre le pignon moteur. Dans le cas où le manchon d'entraînement est maintenu en position axiale autour de l'arbre central à l'aide d'une bague taraudée vissée en bout de l'arbre central, le dispositif de précontrainte peut comprendre des vis, vissées dans des taraudages traversant la bague parallèlement à son axe, et dont l'extrémité de la tige de chacune est conformée en téton d'appui appliqué contre une surface d'appui au fond d'une encoche dans la face d'extrémité axiale du manchon d'entraînement qui est opposée au porte-joint.

La présente invention sera mieux comprise à l'aide d'un exemple de réalisation décrit ci-après, à titre non limitatif, en référence aux figures annexées dans lesquelles:

- la figure 1 est une coupe horizontale de la partie arrière du fuselage d'un hélicoptère équipé d'un rotor anticouple selon l'invention,

- la figure 2 est une demi-coupe axiale, selon II-II de la figure 3, du rotor représenté sur la figure 1,

- la figure 3 est un quart de coupe radiale, selon III-III de la figure 2,

- la figure 4 est une coupe transversale d'une pale, selon IV-IV de la figure 3,

- la figure 4a est une vue à échelle agrandie, du bord de fuite de la pale de la figure 4.

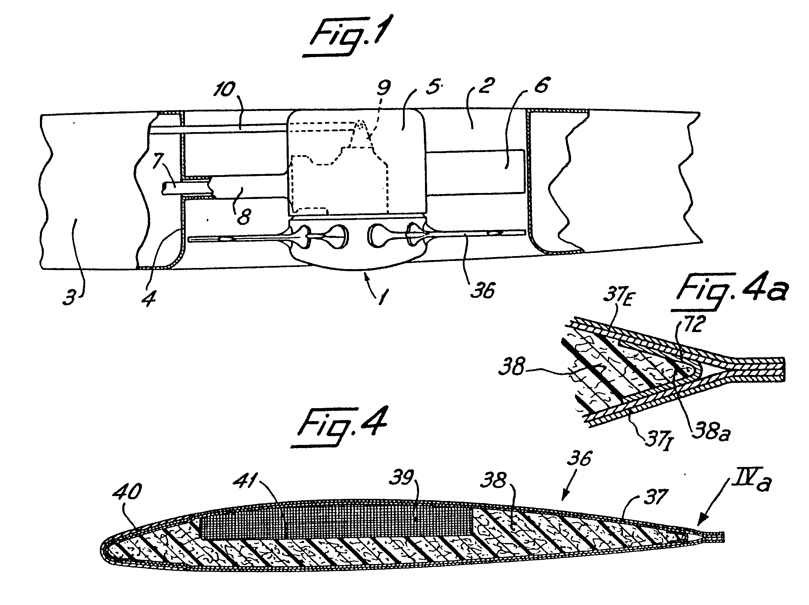

Sur la figure 1, le rotor multipale, utilisé comme rotor arrière anti-couple, compensant le couple moteur transmis à au moins un rotor principal par une boîte de transmission principale, et désigné dans son ensemble par 1, est monté et entraîné en rotation dans une veine ou fenêtre verticale 2, de forme légèrement tronconique, délimitée dans la partie arrière du fuselage ou empennage 3 d'un hélicoptère par un carénage 4. Dans la veine 2, le rotor 1 est supporté et entraîné par une boîte de transmission auxiliaire 5 logée dans un carter à double paroi, de forme généralement cylindrique, maintenu au centre de la veine 2 par un support comportant plusieurs bras radiaux carénés 6.

La boîte de transmission auxiliaire 5, qui est par exemple telle que celle décrite et représentée dans le brevet français 1 593 008 auquel on se reportera avantageusement pour plus de précisions, renferme un engrenage conique, dont le pignon primaire est entraîné par un arbre de transmission 7 reliant la boîte de transmission principale à la boîte de transmission auxiliaire 5, et traversant un bras creux 8 reliant le carénage 4 au carter de la boîte de transmission auxiliaire 5. Cette dernière renferme également un renvoi d'angle 9, sollicité par une bielle de commande collective de l'incidence 10 afin de déplacer parallèlement à l'axe de la veine 2 un arbre de commande collective d'incidence décrit ci-après. Le renvoi d'angle 9 et la bielle 10 ont été schématiquement représentés comme sur la figure 1 du brevet précité, dans un but de clarté, mais la bielle 10 peut éventuellement traverser également le bras creux 8.

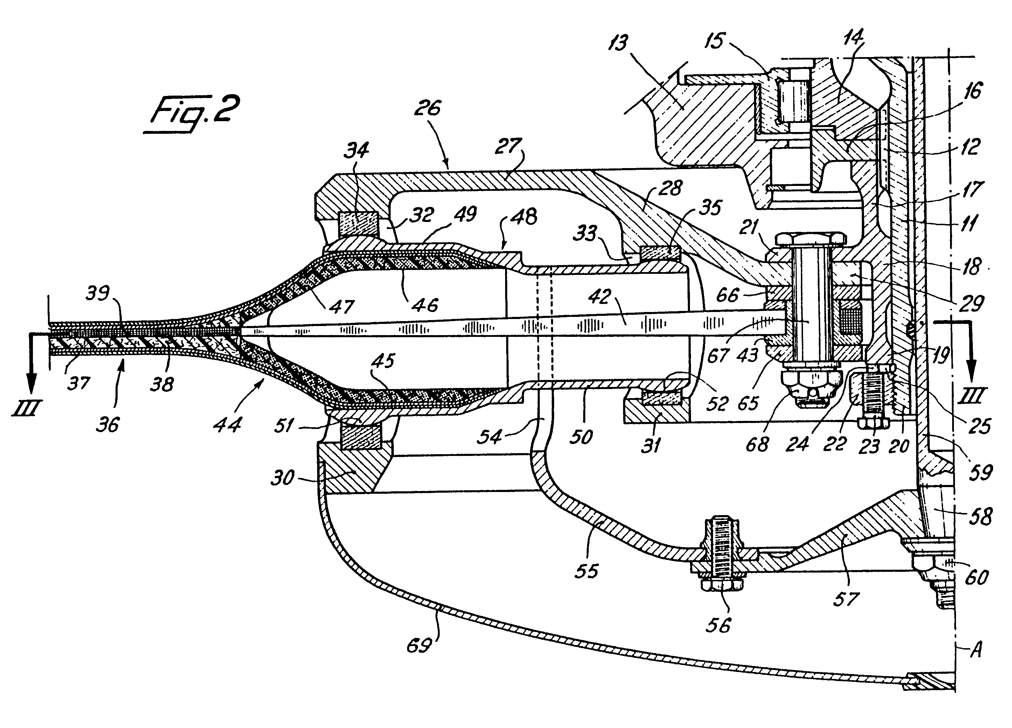

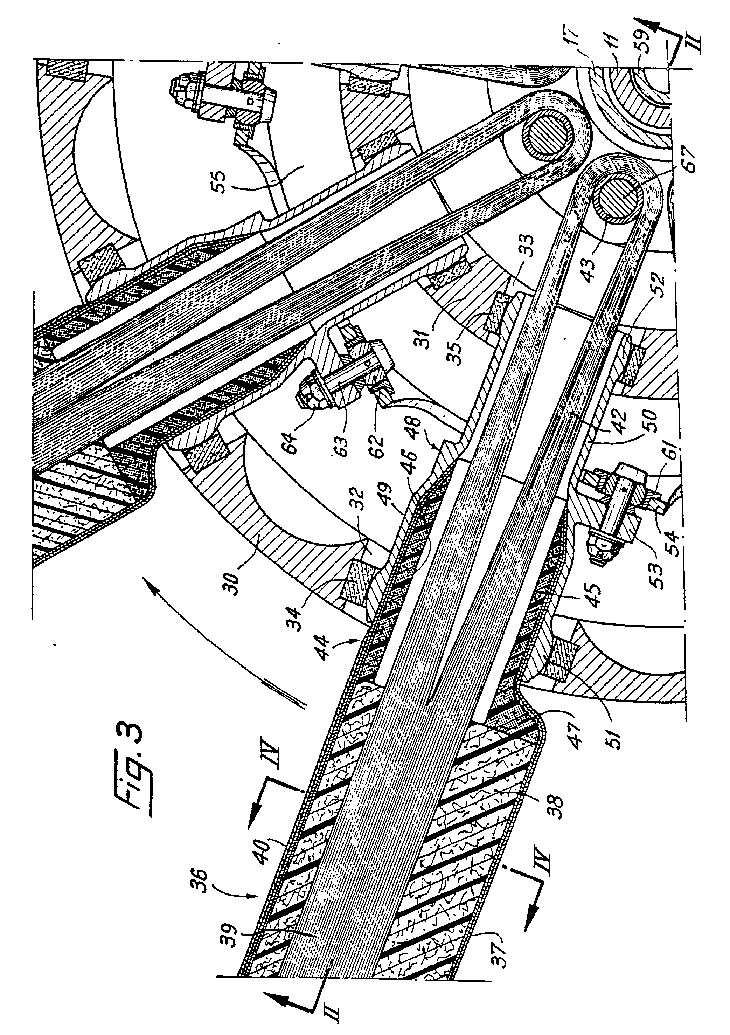

En référence aux figures 2 et 3, le rotor 1 comprend un arbre central tubulaire 11 coaxial à la veine 2, et monté en rotation autour de l'axe A de la veine 2 par des roulements logés dans la boîte de transmission auxiliaire 5. L'arbre 11 est entraîné en rotation par des cannelures axiales 12 d'une partie d'arbre traversant le carter 13 de la boîte de transmission auxiliaire 5, et qui sont en prises avec des cannelures correspondantes du pignon conique secondaire 14 de l'engrenage conique logé dans la boîte de transmission auxiliaire 5, ce pignon secondaire 14 étant lui-même monté en rotation dans le carter 13 par un roulement à rouleaux 15. Par ses cannelures 12 l'arbre 11 est également en prise avec des cannelures correspondantes de l'extrémité axiale interne (c'est-à-dire tournée vers la boîte de transmission auxiliaire 5) d'un manchon d'entraînement 17 qui est en appui axial par cette extrémité axiale interne contre un porte-joint 18, serré contre le pignon secondaire 14. Ce manchon 17, solidaire en rotation de l'arbre 11, est coaxial à ce dernier grâce à deux portées d'appui cylindriques internes 18 et 19 décalées axialement et telles que l'extrémité axiale externe filetée 20 de l'arbre 11 est en saillie par rapport à la portée cylindrique axiale externe 19 du manchon 17. Au niveau de sa portée axiale interne 18, ce manchon 17 présente une bride annulaire radiale externe 21, par laquelle le manchon 17 est fixé à un moyeu décrit ci-après et auquel le manchon 17 transmet le couple moteur reçu de l'arbre 11, lequel le reçoit du pignon conique 14, et le manchon 17 reprend également une partie des efforts de poussée développés par la rotation des pales décrites ci-dessous. Le manchon 17 est maintenu axialement en place, en exerçant une force d'appui axiale prédéterminée contre le porte-joint 16, par une bague taraudée 22, vissée sur l'extrémité filetée 20 de l'arbre 11, et qui est traversée par quatre alésages axiaux régulièrement répartis sur la bague 22 et dans chacun desquels est vissée une vis de calage 23 dont l'extrémité de la tige, en forme de téton d'appui 24, est appliquée contre une surface d'appui du fond d'une encoche 25 ménagée dans la face d'extrémité axiale externe du manchon 17.

En appliquant un couple de serrage prédéterminé sur les têtes des quatre vis 23 qui prennent appui d'une part sur la bague 22 et d'autre part sur le manchon 17, on exerce facilement sur l'empilement axial constitué par le manchon 17, le porte-joint 16 et le pignon conique d'entraînement 14, une précontrainte axiale qui permet de reprendre les jeux axiaux et d'éviter les vibrations et la détérioration des éléments de cet empilement, les quatre vis 23 étant ensuite freinées simultanément.

Le moyeu a sensiblement la forme d'un moule à gâteau circulaire muni d'une cheminée centrale. Plus précisément, le moyeu comprend un corps de moyeu 26, en tôle emboutie ou en une matière synthétique injectée et éventuellement armée, ayant la forme d'une cuvette dont le fond est constitué d'une partie radiale externe plane 27 raccordée par une partie intermédiaire tronconique 28, dirigée vers l'intérieur de la cuvette, à une partie radiale interne annulaire et plane 29 entourant une ouverture centrale de diamètre légèrement supérieur au diamètre externe de la partie du manchon 17 située axialement à l'extérieur de la bride 21, de sorte que le corps de moyeu 26 peut être glissé axialement sur cette partie du manchon 17, jusqu'à venir reposer par la partie annulaire plane 29 contre la bride 21 du manchon 17. Le corps de moyeu 26 est également constitué de deux parois cylindriques coaxiales l'une à l'autre, dont l'une 30 en position radiale externe et se raccordant par son extrémité axiale interne à l'extrémité radiale externe de la partie 27 du fond, est d'une hauteur supérieure à celle de l'autre paroi cylindrique 31, en position radiale interne et se raccordant par son extrémité axiale interne à la partie tronconique 28 du fond. Dans ces deux parois 30 et 31 sont percées, pour chacune des pales que doit comporter le rotor, deux ouvertures circulaires 32 et 33 coaxiales centrées sur un axe radial, et telles que l'ouverture 32 dans la paroi externe 30 est d'un diamètre supérieur au diamètre de l'ouverture 33 dans la paroi interne 31. Deux bagues auto-lubrifiantes 34 et 35 sont logées respectivement dans des gorges annulaires ménagées dans la paroi des ouvertures 32 et 33, le diamètre interne de la bague 34 étant supérieur à celui de la bague 35.

Le rotor comporte également onze pales 36 ayant chacune sensiblement 40 cm de longueur, 7,7 cm de largeur et une loi de vrillage d'environ 7°, et la structure de ces pales 36 est décrite ci-dessous en référence non seulement aux figures 2 et 3 mais également aux figures 4 et 4a.

Chaque pale 36 est essentiellement constituée, dans sa partie courante, d'une coque 37 ayant la forme du profil aérodynamique souhaité, d'un pain de remplissage préformé 38, d'un étrier de bord de fuite 72, d'un longeron 39 et d'une coiffe de bord d'attaque en titane ou en acier inoxydable 40.

La coque 37 est réalisée par un empilement constitué, en allant de l'extérieur vers l'intérieur, de deux couches superposées de tissus en fibres de verre ou de Kevlar (marque déposée) disposées de telle sorte que, par exemple, leurs fils de chaîne soient croisés à angle droit et inclinés à 45° sur l'axe longitudinal de la pale, et de deux couches de tissus en fibres de carbone, de préférence également croisées et inclinées à 45°, et l'ensemble de ces quatre couches est aggloméré par une résine synthétique polymérisée par thermodurcissage de façon à former un caisson creux assurant la rigidité en torsion de l'ensemble de la pale, dans laquelle le pain de remplissage 38 ne présente pas de tenue au cisaillement.

Ce pain de remplissage 38 est un élément de mousse ou de matière synthétique cellulaire, dont la forme externe correspond au volume interne de la coque 37 dans laquelle il est enfermé, et qui présente une découpe 41 de section sensiblement rectangulaire s'étendant sur toute sa longueur et s'ouvrant dans la face du pain 38 qui est tournée vers l'extrados de la pale 36.

Un étrier de renfort 72 préformé en V, constitué de tissus de fibres de carbone préimprégnés de résine synthétique, vient coiffer l'arête arrière 38a, côté bord de fuite de la pale 36, du pain de remplissage 38. Cet étrier 72 est collé par ses faces externes aux tissus constituant la coque 37 de pale et par ses faces internes, au pain de remplissage 38. Cet étrier 72 est essentiellement destiné à assurer la tenue de la coque 37 au couple de torsion et aux moments de trainée la sollicitant.

Le longeron 39 est une lame allongée pleine réalisée en stratifils de Kevlar agglomérés par une résine synthétique thermodurcie et ayant, sur les deux tiers environ de sa longueur qui sont reçus dans la partie courante de la pale 36, une section qui correspond à celle du logement délimité par la découpe 41 du pain de remplissage 38 et par la face inférieure de la partie en regard de l'extrados de la coque 37.

Le longeron 39 destiné à reprendre les efforts centrifuges sollicitant la pale 36 en service constitue, par son troisième tiers qui sort de la partie courante de la pale en traversant le pied de pale décrit ci-dessous, une partie d'emplanture 42 en forme de boucle (voir figure 3) et d'épaisseur croissante (voir figure 2) de la partie du longeron 39 reçue dans la partie courante de la pale 36 vers l'extrémité libre de la boucle, qui entoure une bobine métallique 43 formant l'attache de la pale 36, en étant enroulée dans une gorge autour de cette bobine 43.

Dans la partie courante de la pale 36, la particularité de l'assemblage de la coque 37, du pain de remplissage 38 et du longeron 39 réside dans la liaison directe de la face du longeron 39 qui n'est pas en regard de l'une des faces de la découpe 41 du pain de remplissage 38 avec la face intérieure de la couche intérieure des tissus de revêtement de la partie d'extrados de la coque 37, sur toute la longueur du longeron 39 qui est reçue dans la partie courante de la pale 36, c'est-à-dire sur les deux tiers externes environ de la longueur du longeron 39.

Cette particularité de structure de la pale 36 présente le double intérêt de procurer une liaison d'excellente qualité entre le longeron 39 et la coque 37 par un collage direct d'un élément sur l'autre sur une grande surface, ce qui engendre une meilleure tenue à la force centrifuge, aux moments de flexion et au couple de torsion qui sollicitent la pale.

Chaque pale 36 comporte en outre un pied de pale 44, réalisé avec les couches de tissus de fibres du revêtement ou de la coque 37 et avec des couches de tissus de fibres de renfort 45, afin de donner au pied de pale 44 une épaisseur suffisante. Ce pied de pale 44 comporte un cylindre creux 46, dont l'extrémité radiale interne se rétrécit en tronc de cône, et qui est relié par son extrémité radiale externe à la partie courante de la pale 36 par une zone de transition 47 s'étendant sur une longueur voisine de la corde de la pale 36. Le pied de pale 44 est monté par son cylindre creux 46 dans un palier constitué par un manchon métallique 48 en alliage d'aluminium.

Ce manchon 48 comprend deux parties tubulaires 49 et 50 coaxiales, de section circulaire ayant des diamètres interne et externe différents, et dont les alésages cylindriques sont reliés par une partie tronconique. Le cylindre creux 46 du pied de pale 44 et son extrémité radiale interne tronconique sont coiffés respectivement par la partie tubulaire de plus grand diamètre interne et externe 49 et par la partie tronconique du manchon 48, et sont fixés respectivement à ces deux parties par collage. Cette forme du manchon 48 favorise l'appui de ce dernier contre le cylindre creux 46 du pied de pale 44 sous l'effet de la force centrifuge.

Autour de son extrémité radiale interne, tournée vers l'arbre 11 du rotor, la partie de plus petit diamètre interne et externe 50 du manchon 48 présente une collerette 52 de forme sphéroïde dont le diamètre maximum externe correspond au diamètre interne de la bague auto-lubrifiante 35 logée dans l'ouverture 33 de la paroi interne 31 du moyeu 26. De manière analogue, une collerette 51, également de forme sphéroïde, et dont le diamètre maximum externe correspond au diamètre interne de la bague auto-lubrifiante 34 logée dans l'ouverture 32 de la paroi externe 30 du moyeu 26, est présentée par la partie de plus grand diamètre interne et externe 49 du manchon 48, autour de son extrémité radiale externe, c'est-à-dire dans la position de plus grand écartement vis-à-vis de la collerette 52 sur le manchon 48.

Ce dernier comporte également un bossage latéral 53, rattaché à la partie tronconique du manchon 48, entre les deux collerettes 51 et 52, et s'étendant dans une direction sensiblement perpendiculaire à l'axe du manchon 48 ainsi qu'à l'axe A de rotation du rotor.

Les dimensions et l'encombrement du manchon 48 et de son bossage latéral 53 sont tels qu'en inclinant convenablement une pale 36 et son manchon 48 après avoir introduit l'extrémité radiale interne de la boucle de la partie d'emplanture 42 et la bobine métallique 43 ainsi que la partie 50 du manchon 48 dans une ouverture 32 de la paroi externe 30 du moyeu, il est possible de faire passer le bossage latéral 53 dans cette ouverture 32, puis d'engager la partie 50 du manchon 48 dans l'ouverture 33 correspondante et de positionner les parties 49 et 50 de telle sorte que les collerettes 51 et 52 viennent respectivement en appui à l'intérieur des bagues 34 et 35 des ouvertures 32 et 33.

Dans cette position de la pale 36, le bossage 53 est en regard de l'une de plusieurs pattes axiales 54, en nombre égal au nombre des pales 36 du rotor, et dont l'extrémité axiale externe est solidaire d'un plateau de commande 55 annulaire et bombé. Par une couronne d'ensembles vis-écrou 56, le bord radial interne du plateau de commande 55 est superposé et solidarisé au bord radial externe d'un flasque 57 de forme tronconique, afin de présenter une excellente rigidité, et qui est monté par emmanchement conique de sa partie centrale sur une fusée conique 58 d'un arbre de commande collective de pas 59 monté coulissant axialement dans l'arbre tubulaire de rotor 11, le flasque 57 étant retenu sur l'arbre de commande de pas 59 par un écrou à collerette d'appui 60 vissé sur l'extrémité axiale externe filetée de la fusée 58.

Chacune des pattes axiales 54 du plateau 55 est percée d'un alésage équipé d'une bague 61 dans laquelle est reçue une rotule 62 retenue par une goupille transversale sur la tige et contre la tête d'un goujon à tête 63, dont l'extrémité filetée de la tige traverse un perçage du bossage 53 et reçoit un écrou 64 goupillé sur la tige en position vissée.

Chaque bossage 53 constitue avec le goujon 63, l'écrou 64, la rotule 62 et la patte 54 qui lui correspondent, un levier de commande du pas de la pale 36 dont le pied 44 est solidaire du manchon 48 correspondant. Les différents leviers de commande de pas ainsi constitués, le plateau de commande 55, le flasque 57 et l'arbre de commande collective de pas 59 constituent un ensemble de commande collective du pas des pales 36 du rotor, tel que tout déplacement axial de l'arbre 59 dans l'arbre tubulaire 11 commande, par l'intermédiaire des leviers de commande de pas, l'application d'un couple de torsion sur les manchons 48, et donc également sur les pieds de pale 44 et les pales 36 autour des axes longitudinaux de ces dernières. Ce couple de torsion provoque la rotation des manchons 48 et donc aussi des pales 36 autour des axes longitudinaux de ces dernières en entrainant une torsion de la partie d'emplanture 42 du longeron 39. Chaque levier de commande de pas est situé entre les deux collerettes 51 et 52 du manchon de palier correspondant, lesquelles sont écartées au maximum l'une de l'autre, ce qui permet d'assurer un meilleur appui de chaque pale 36 et de réduire les efforts radiaux exercés par les collerettes 51 et 52 sur les bagues auto-lubrifiantes 34 et 35 correspondantes.

Enfin, lorsque chaque pale 36 est convenablement disposée dans le moyeu 26 de sorte que les collerettes 51 à 52 du manchon de palier 48 correspondant sont en appui à l'intérieur des bagues 34 et 35 des ouvertures 32 et 33 correspondantes, la bobine métallique 43 de l'extrémité radiale interne de la partie d'emplanture 42 en forme de boucle du longeron 39 est reçue entre deux couronnes métalliques 65 et 66 engagées autour du manchon d'entraînement 17, et par un unique goujon 67, dont la tige traverse des perçages alignés de la bride 21 du manchon 17, de la partie centrale 29 du corps de moyeu 26 et des couronnes 65 et 66, ainsi que le passage central de la bobine 43, et sur l'extrémité filetée de laquelle est vissé un écrou 68 goupillé, on assure la solidarisation de cette bobine 43 au corps de moyeu 26 et à la bride 21 du manchon d'entraînement 17, les couronnes métalliques 65 et 66 de part et d'autre de la bobine 43 assurant la répartition des efforts centrifuges d'une bobine d'attache 43 à l'autre.

Enfin, un capot bombé 69, fixé, par exemple par des vis, par son bord radial externe sur la périphérie de la paroi radiale externe 30 du corps de moyeu 26, recouvre l'ensemble de commande collective de pas des pales 36 et protège le moyeu contre la pénètration de poussières, de cailloux, etc.

Dans cette réalisation, on constate que la partie centrale 29 du corps de moyeu 26 travaille peu et ne sert qu'à la transmission du couple moteur du manchon d'entraînement 17 aux pales 36, afin de faire tourner ces dernières. Cependant, le corps de moyeu 26 reprend une partie des efforts de flexion. Ceci est obtenu grâce à la disposition favorable des collerettes d'appui 51 et 52 des manchons de palier 48. De plus, les couronnes 65 et 66 de répartition des efforts centrifuges évitent toute sollicitation importante du manchon d'entraînement 17 et empêchent de faire travailler les goujons de fixation 67 en flexion.

Cette réalisation permet un montage et un démontage aisés des différents composants du rotor multipale, ce qui facilite considérablement les opérations d'entretien et diminue le coût de la maintenance. En particulier, il est aisé de procéder au changement d'une pale 36 endommagée sans avoir à démonter d'autres éléments, puisqu'il suffit de désaccoupler le bossage 53 correspondant du goujon 63 en dévissant l'écrou 64 et de désaccoupler la bobine 43 correspondante du goujon 67 en dévissant l'écrou 68. A cet effet, le flasque 57 peut être ajouré afin de permettre l'accès à l'écrou 68 sans avoir à démonter le flasque 57 et le plateau 55 de l'arbre 59, après désaccouplement des bossages 53 de toutes les pales 36.

**Revendications**

1. Hélice multipale à pas variable, destinée en particulier à être utilisée comme rotor arrière d'un giravion, et comprenant:
   - un arbre central (11) entraîné en rotation autour d'un axe central (A),
   - un moyeu (26) solidaire en rotation de l'arbre central (11) autour de l'axe (A),
   - des pales (36), de préférence en nombre impair, comportant chacune:
     . une coque (37) à profil aérodynamique, constituée d'au moins une couche de tissus de fibres à haute résistance mécanique rigidifiée par une résine synthétique d'imprégnation polymérisée, et dont l'extrémité intérieure se prolonge par un pied de pale (44),
     . un corps de remplissage (38) en une matière synthetique cellulaire ou en mousse, disposé dans la coque (37),
     . un longeron (39) d'axe longitudinal sensiblement parallèle à celui de la pale (36) et constitué par une unique lame allongée en fibres à haute résistance mécanique agglomérées par une résine synthétique polymérisée, dont la plus grande partie est fixée dans la coque (37), et dont une partie d'extrémité intérieure, sortant de la coque (37) en traversant le pied de pale (44), forme une partie d'emplanture (42) torsible et flexible par laquelle le longeron (39) est rattaché au moyeu (26),
   le pied de pale (44) étant solidaire d'un organe (48) de commande de l'incidence qui est destiné à exercer sur la coque (37) un couple de torsion sensiblement centré sur l'axe longitudinal du longeron (39) lorsqu'il est sollicité par un ensemble de commande collective de l'incidence des pales (36), et qui est monté en rotation dans le moyeu (26) autour de l'axe longitudinal de la pale (36) correspondante, caractérisée en ce que chaque pale (36) est individuellement rattaché au moyeu (26) par la partié d'emplanture (42) du longeron (39) aménagée en forme de boucle qui entoure, par son extrémité interne, une unique bobine (43) d'attache boulonnée sur le moyeu (26), et en ce que l'organe (48) de commande de l'incidence de chaque pale (36) est monté en rotation dans deux ouvertures (32, 33) circulaires coaxiales, centrées chacune sur l'axe longitudinal de la pale (36) correspondante en étant espacées radialement l'une de l'autre et ménagées chacune dans l'un de deux supports (30, 31) solidaires du moyeu.

2. Hélice selon la revendication 1, caractérisée en ce que chaque bobine d'attache, (43) est axialement traversée par la tige à extrémité filetée d'un unique goujon (67) de liaison de la bobine (43) à une partie radiale annulaire et plane (29) entourant une ouverture centrale du moyeu (26) autorisant la disposition coaxiale du moyeu (26) autour de l'arbre central (11).

3. Hélice selon l'une des revendications 1 et 2, caractérisée en ce que deux couronnes rigides radiales et plates (65, 66) sont disposées de part et d'autre des bobines d'attache (43) des pales (36) et autour de l'arbre central (11), et présentent chacune, pour chaque bobine (43), un perçage destiné à être aligné avec le passage central de la bobine (43) correspondante et a recevoir la tige de l'unique goujon de liaison de cette bobine (43) au moyeu (26), afin de répartir les efforts centrifuges d'une bobine d'attache (43) à l'autre.

4. Hélice selon l'une des revendications 1 à 3, caractérisée en ce que le moyeu (26) a la forme d'une cuvette comportant deux parois cylindriques coaxiales (30, 31) radialement écartées l'une de l'autre et dans chacune desquelles est percée, pour chaque pale (36) l'une des deux ouvertures (32, 33) dans chacune desquelles l'organe (48) de commande de l'incidence de la pale (36) correspondante est monte en rotation par l'intermédiaire d'une bague auto-lubrifiante (34, 35) coaxiale à l'ouverture (32, 33) dans laquelle la bague est logée.

5. Hélice selon la revendication 4, caractérisée en ce que les diamètres internes de l'ouverture (33) percée dans la paroi radiale interne (31) du moyeu (26) et de la bague auto-lubrifiante (35) logée dans cette ouverture (33) sont inférieurs respectivement aux diamètres de l'ouverture (32) percée dans la paroi radiale externe (30) du moyeu (26) et la bague auto-lubrifiante (34) logée dans cette ouverture (32), et en ce que l'organe (48) de commande de l'incidence de la pale (36) correspondante présente deux portées (51, 52) circulaires coaxiales centrées sur l'axe longitudinal de la pale (36), radialement écartées l'une de l'autre, de sorte que par sa portée radiale externe (51), dont le diamètre externe correspond au diamètre interne de la bague radiale externe (34), et par sa portée radiale interne (52), dont le diamètre externe correspond au diamètre interne de la bague radiale interne (35), l'organe (48) prend appui respectivement à l'intérieur des bagues radiales externe (34) et interne (35).

6. Hélice selon la revendication 5, caractérisée en ce que l'organe de commande de l'incidence est un palier en forme de manchon (48) traversé par la partie d'emplanture (42) du longeron (39) de la pale, coiffant le pied de pale (44) et solidarisé à ce dernier, par exemple par collage, et dont chacune des extrémités est entourée par l'une des deux portées (51, 52).

7. Hélice selon la revendication 6, caractérisée en ce que le pied de pale (44) comprend un cylindre creux (46), dont l'extrémité interne est de forme tronconique, et une zone de transition (47) reliant le cylindre creux (46) à la coque (37) de la pale (36), et en ce que le manchon (48) comprend une partie cylindrique externe de grand diamètre entourant le cylindre creux (46) du pied de pale (44) et raccordée par une partie tronconique intermédiaire, par laquelle le manchon (48) s'appuie contre l'extrémité interne tronconique du cylindre creux (46), à une partie cylindrique interne de petit diamètre.

8. Hélice selon la revendication 7, caractérisée en ce que les deux portées sont constituées chacune par l'une de deux collerettes (51, 52) de forme sphèroïde sur la surface externe de l'extrémité du manchon (48), et d'une seule pièce avec ce dernier qui est métallique.

9. Hélice selon l'une des revendications 5 à 8, caractérisée en ce que l'organe (48) de commande de l'incidence comporte également, entre ces deux portées (51, 52), un bossage latéral (53) relié par une articulation à rotule (62, 63) à l'une des pattes axiales (54), en nombre égal au nombre des pales (36) de l'hélice, d'un plateau de commande de l'incidence (55) déplacé axialement parallèlement à l'axe de rotation (A), par un arbre de commande collective de l'incidence (59) monté coulissant axialement dans l'arbre central tubulaire (11).

10. Hélice selon la revendication 9, caractérisée en ce que le plateau de commande (55) est un plateau annulaire et bombé relié à l'arbre de commande collective de l'incidence (59) par un flasque (57) de forme tronconique monté sur ce dernier par emmanchement conique (58, 60).

11. Hélice selon l'une des revendications 9 et 10, caractérisée en ce que chacune des pattes axiales (54) du plateau (55) présente un alésage bagué (61) dans lequel est reçue une rotule (62) retenue sur une tige (63) fixée au bossage latéral (53) correspondant.

12. Hélice selon l'une des revendications 1 à 11, caractérisée en ce qu'elle comprend de plus un manchon d'entraînement (17), destiné à transmettre le couple-moteur de l'arbre central (11) au moyeu (26) et entourant l'arbre central (11), en étant coaxial à ce dernier et solidaire en rotation de ce dernier et comportant une bride radiale externe et annulaire (21) de solidarisation à une partie radiale annulaire (29) du moyeu (26).

13. Hélice selon la revendication 12, caractérisée en ce que la solidarisation de la bride (21) du manchon d'entraînement (17) à la partie annulaire (29) du moyeu (26), est assurée par des goujons (67) régulièrement répartis autour de l'axe de rotation (A), en nombre égal au nombre de pales (36) de l'hélice, et dont chacun assure simultanément la retenue, sur la partie annulaire (29) du moyeu (26) d'une bobine d'attache (43) de la partie d'emplanture (42) du longeron (39) d'une pale (36), en coopération avec un écrou (68) vissé sur l'extrémité filetée de la tige du goujon (67) qui traverse des perçages de la bride (21) et de la partie annulaire (29) du moyeu (26) qui sont alignés avec le passage central de la bobine (43).

14. Hélice selon l'une des revendications 12 et 13, caractérisée en ce que le manchon d'entraînement (17) est maintenu en position axiale autour de l'arbre central (11) à l'aide d'une bague taraudée (22) vissée en bout de l'arbre central (11).

15. Hélice selon l'une des revendications 12 à 14, caractérisée en ce que l'arbre central (11) porte des cannelures externes (12) par lesquelles il est en prise d'une part avec des cannelures internes d'un pignon moteur (14) et d'autre part avec des cannelures internes du manchon d'entraînement (17), séparé du pignon moteur (14) par un porte-joint (16) et en ce qu'un dispositif de précontrainte axiale permet de maintenir une force axiale d'appui prédéterminée du manchon d'entraînement (17) contre le porte-joint (16) et le pignon moteur (14).

16. Hélice selon la revendication 15 telle que rattachée à la revendication 14, caractérisée en ce que le dispositif de précontrainte comprend des vis (23) vissées dans des taraudages traversant la bague (22) parallèlement à son axe, et dont l'extrémité de la tige de chacune est conformée en téton d'appui (24) applique contre une surface d'appui au fond d'une encoche (25) dans la face d'extrémité axiale du manchon d'entraînement (17) qui est opposée au porte-joint (16).

**Patentansprüche**

1. Mehrflügeliger Propeller mit verstellbarer Steigung, der insbesondere zur Verwendung als hinterer Rotor eines Drehflüglers bestimmt ist, mit:
   - einer zentralen Welle (11), die um eine zentrale Achse (A) in Drehung versetzt wird,
   - eine Nabe (26), die zusammen mit der zentralen Welle um die Achse (A) umläuft,
   - Rotorblätter (36), vorzugsweise in einer ungeraden Anzahl, wovon jedes aufweist:
   eine Schale (37) mit aerodynamischem Profil, die durch mindestens eine Stoffschicht aus Fasern hoher mechanischer Festigkeit gebildet wird, die durch ein polymerisiertes Imprägnierungs-Kunstharz versteift wird, und deren inneres Ende sich durch einen Blattfuß (44) verlängert,
   einen Füllkörper (38) aus zellenförmigem Kunststoff oder aus einem Schaumstoff, der in der Schale (37) angeordnet ist,
   einen Längsträger (39) mit einer Längsachse, die im wesentlichen parallel zu jener des Rotorblatts (36) verläuft und der durch eine einzelne längliche Platte gebildet wird, die aus Fasern hoher mechanischer Festigkeit besteht, die durch ein polymerisiertes Kunstharz zusammengehalten werden, und deren größter Abschnitt in der Schale (37) befestigt ist, während ein innerer Endabschnitt, der aus der Schale (37) hervorsteht und den Blattfuß (44) durchdringt, einen drehbaren und biegsamen Einsteckabschnitt (42) bildet, mittels welchem der Längsträger (39) an der Nabe (26) befestigt ist,
   wobei der Blattfuß (44) fest mit einem Anstellwinkel-Einstellelement (48) verbunden ist, das dazu dient, auf die Schale (37) ein Drehmoment auszuüben, das im wesentlichen an der Längsachse des Längsträgers (39) angreift, wenn dieser durch eine Anordnung zur gemeinsamen Einstellung des Anstellwinkels der Rotorblätter (36) beeinflußt wird und welches in der Nabe (26) um die Längsachse des zugehörigen Rotorblatts (36) drehbar angeordnet ist,

dadurch gekennzeichnet, daß jedes Rotorblatt (36) individuell an der Nabe (26) mittels des Einsteckabschnitts (42) des Längsträgers (39) befestigt ist, der als Schlaufe ausgebildet ist, die durch ihr inneres Ende eine einzige Befestigungsspule (43) umgibt, die mittels eines Bolzens an der Nabe (26) befestigt ist, und ferner dadurch, daß das Anstellwinkel-Einstellelement (48) zur Einstellung des Anstellwinkels eines jeden Rotorblatts (36) drehbar in zwei kreisförmigen koaxialen Öffnungen (32, 33) befestigt ist, von denen jede um die Längsachse des zugehörigen Rotorblatts (36) zentriert ist und die radial im Abstand voneinander liegen und von denen jede in einer von zwei Halterungen (30, 31) angeordnet ist, die fest mit der Nabe verbunden sind.

2. Propeller nach Anspruch 1,
dadurch gekennzeichnet, daß jede Befestigungsspule (43) axial von einem mit Gewindeende ausgestatteten Schaft eines einzigen Verbindungsbolzens (67) durchdrungen wird, der zur Verbindung der Befestigungsspule (43) an einem radialen ringförmigen und ebenen Abschnitt (29) dient, der eine zentrale Öffnung der Nabe (26) umgibt und die koaxiale Anordnung der Nabe (26) um die zentrale Welle (11) gestattet.

3. Propeller nach einem der Ansprüche 1 und 2,
dadurch gekennzeichnet, daß zwei starre radiale und ebene Kränze (65, 66) beiderseits der Befestigungsspulen (43) der Rotorblätter (36) und um die zentrale Welle (11) angeordnet sind, und jeweils für jede Spule (43) eine Bohrung aufweisen, die dazu dient, mit der zentralen Öffnung der zugeordneten Spule (43) in Fluchtung zu kommen und den Schaft des einzigen Verbindungsbolzens dieser Spule (43) zum Kern (26) aufzunehmen, um die Zentrifugalkräfte von einer Befestigungsspule (43) zur anderen zu verteilen.

4. Propeller nach einem der Ansprüche 1 bis 3,
dadurch gekennzeichnet, daß die Nabe (26) die Form eines Trichters aufweist, der zwei zylindrische koaxiale Wände (30, 31) aufweist, die radial im Abstand voneinander liegen und in welche jeweils für jedes Rotorblatt (36) eine der beiden Öffnungen (32, 33) angebracht ist, in welcher jeweils das Anstellwinkel-Einstellelement (48) für das zugehörige Rotorblatt (36) unter Zwischenschaltung eines selbstschmierenden Rings (34, 35) drehbar befestigt ist, wobei der Ring koaxial zur Öffnung (32, 33) liegt, in der der Ring untergebracht ist.

5. Propeller nach Anspruch 4,
dadurch gekennzeichnet, daß die Innendurchmesser der Öffnung (33), die in der inneren radialen Wand (31) der Nabe (26) angebracht ist und des selbstschmierenden, in dieser Öffnung (33) angeordneten Rings (35) jeweils kleiner als die Innendurchmesser der in der radial äußeren Wand (30) der Nabe (26) angebrachten Öffnung (32) und des selbstschmierenden Rings (34) sind, der in dieser Öffnung (32) liegt, und daß das Anstellwinkel-Einstellelement (48) für das zugehörige Rotorblatt (36) zwei kreisförmige koaxiale Ausbauchungen (51, 52) aufweist, die radial im Abstand voneinander liegen, so daß sich das Anstellwinkel-Einstellelement (48) mittels seiner radial äußeren Ausbauchung (51), deren Außendurchmesser dem Innendurchmesser des äußeren radialen Rings (34) entspricht, und mittels seiner radial inneren Ausbauchung (52), deren Außendurchmesser den Innendurchmesser des radial inneren Rings (35) entspricht, jeweils am Innenumfang des radial äußeren (34) und radial inneren Rings (35) abstützt.

6. Propeller nach Anspruch 5,
dadurch gekennzeichnet, daß das Anstellwinkel-Einstellelement ein Lager in Form einer (48) ist, die von dem Einsteckabschnitt (42) des Hülse Längsträgers (39) des Rotorblatts durchdrungen wird, und die den Rotorblattfuß (44) umgibt, und fest mit diesem verbunden ist, beispielsweise durch Verkleben, und deren beide Enden von einer der beiden Ausbauchungen (51, 52) umgeben sind.

7. Propeller nach Anspruch 6,
dadurch gekennzeichnet, daß der Rotorblattfuß (44) einen Hohlzylinder (46) dessen inneres Ende kegelstumpfförmig ausgebildet ist, und eine Übergangszone (47) die den Hohlzylinder (46) mit der Schale (37) des Rotorblatts (36) verbindet umfaßt, und daß die Hülse (48) einen äußeren zylindrischen Abschnitt mit großem Durchmesser umfaßt, der den Hohlzylinder (46) des Rotorblattfußes (44) umgibt und der über einen kegelstumpfförmigen Zwischenabschnitt, mittels welchem die Hülse (48) sich gegen das innere kegelstumpfförmige Ende des Hohlzylinders (46) abstützt, mit einem inneren zylindrischen Abschnitt mit kleinerem Durchmesser verbunden ist.

8. Propeller nach Anspruch 7,
dadurch gekennzeichnet, daß die beiden Ausbauchungen (51, 52) jeweils aus einem von zwei kugelförmigen Kragen auf der Außenfläche des Endes der Hülse (48) bestehen und einteilig mit der aus Metall bestehenden Hülse sind.

9. Propeller nach einem der Ansprüche 5 bis 8
dadurch gekennzeichnet, daß das Anstellwinkel-Einstellelement (48) ferner zwischen seinen beiden Ausbauchungen (51, 52) einen seitlichen Vorsprung (53) aufweist, der mittels eines Kugelbolzens (62 - 63) gelenkig mit einem aus einer Anzahl axialer Lappen (54) verbunden ist, deren Anzahl der Anzahl der Rotorblätter (36) des Propellers entspricht, und die an einem Einstellteller (55) für den Anstellwinkel vorgesehen sind, der parallel zur Rotationsachse (A) mittels einer Welle (59) zur gemeinsamen Einstellung des Anstellwinkels axial verschoben wird, die axial verschiebbar in der zentralen rohrförmigen Welle (11) befestigt ist.

10. Propeller nach Anspruch 9,

dadurch gekennzeichnet, daß der Einstellteller (55) ein ringförmiger ausgebauchter Teller ist, der mit der Welle (59) zur gemeinsamen Einstellung des Anstellwinkels mittels eines kegelstumpfförmigen Flansches (57) verbunden ist, der auf der Welle (59) mittels einer konischen Schrumpfverbindung (58, 60) befestigt ist.

11. Propeller nach einem der Ansprüche 9 und 10,

dadurch gekennzeichnet, daß jeder der axialen Lappen (54) des Einstelltellers (55) eine ausgekleidete Bohrung (61) aufweist, in welcher ein Kugelabschnitt (62) aufgenommen wird, der durch einen Bolzen (63) gehalten wird, der am zugehörigen seitlichen Vorsprung (53) befestigt ist.

12. Propeller nach einem der Ansprüche 1 bis 11,

dadurch gekennzeichnet, daß er ferner eine Antriebshülse (17) aufweist die dazu dient, das Rotordrehmoment der zentralen Welle (11) auf die Nabe (26) zu übertragen und die die zentrale Welle umgibt, und sich koaxial zu dieser erstreckt und mit ihr zusammen umläuft und ferner einen radialen ringförmigen Außenflansch (21) aufweist, der zur Verbindung mit einem radialen ringförmigen Abschnitt (29) der Nabe (26) dient.

13. Propeller nach Anspruch 12,

dadurch gekennzeichnet, daß die Verbindung des Außenflansches (21) der Antriebshülse (17) mit dem ringförmigen Abschnitt (29) der Nabe (26) durch Bolzen (67) gewährleistet wird, die regelmäßig um die Rotationsachse (A) verteilt sind und deren Anzahl der Anzahl der Rotorblätter (36) des Propellers entspricht, und wovon jeder gleichzeitig die Halterung einer Befestigungsspule (43) des Einsteckabschnitts (42) des Längsträgers (39) eines Rotorblatts (36) auf dem ringförmigen Abschnitt (29) der Nabe (26) gewährleistet, und zwar zusammen mit einer Mutter (68), die auf dem Gewindeende des Schafts des Bolzens (67) sitzt, der durch Bohrungen des Flansches (21) und des ringförmigen Abschnitts (29) der Nabe (26) tritt, die fluchtend zur mittigen Öffnung der Befestigungsspule (43) angeordnet sind.

14. Propeller nach einem der Ansprüche 12 und 13,

dadurch gekennzeichnet, daß die Antriebshülse (17) in axialer Lage um die zentrale Welle (11) mit Hilfe eines Gewinderings (22) gehalten wird, der am Ende der zentralen Welle (11) aufgeschraubt ist.

15. Propeller nach einem der Ansprüche 12 bis 14,

dadurch gekennzeichnet, daß die zentrale Welle (11) Außennuten (12) aufweist, mittels welcher sie einerseits in Eingriff mit inneren Nuten eines Antriebsritzels (14) steht und andererseits mit Innennuten der Antriebshülse (17), die vom Antriebsritzel (14) durch einen Dichtungsträger (16) getrennt ist, und daß ferner eine Anordnung zur axialen Vorspannung gestattet eine vorgegebene axiale Andruckskraft der Antriebshülse (17) gegen den Dichtungsträger (16) und das Antriebsritzel (14) aufrechtzuerhalten.

16. Propeller nach Anspruch 15, unter Rückbeziehung auf Anspruch 14,

dadurch gekennzeichnet, daß die Vorspannungsanordnung Schrauben (23) umfaßt, die in Gewindebohrungen eingeschraubt sind, die sich durch den Gewindering (22) parallel zu dessen Achse erstrecken, und deren Schaftende jeweils als Druckstift (24) ausgebildet ist, der sich gegen eine Anschlagfläche am Boden eines Schlitzes (25) in der Fläche des axialen Endes der Antriebshülse (17) legt, das dem Dichtungsträger (16) gegenüberliegt.

## Claims

1. In a a variable-pitch multi-blade propeller intended in particular to be used as tail rotor of a rotorcraft, and comprising:
- a central shaft (11) driven in rotation about a central axis (A),
- a hub (26) rotating with the central shaft (11) about said axis (A),
- blades (36), preferably in an odd number, each comprising
. a shell (37) aerodynamic profile constituted by at least one layer of fiber fabrics with high mechanical resistance rigidified by a polymerized synthetic resin for impregnation, and of which the inner end extends by a blade root (44),
. a filling body (38) made of cellular or foam synthetic material disposed in the shell (37),
. a spar (39) whose longitudinal axis is parallel to that of the blade (36) and constituted by a single elongated leaf of fibers with high mechanical resistance agglomerated by a polymerized synthetic resin, of which the major part is fixed in the shell (37) and of which one inner end part, emerging from the shell (37) on passing through the blade root (44), forms a twistable and flexible root part (42) by which the spar (39) is connected to the hub (26),
the blade root (44) being fast with a member (48) for controlling the angle of attack which is adapted to exert on the shell (37) torsional moment, substantially centered on the longitudinal axis of the spar (39), when this member is stressed by an assembly for collectively controlling the angle of attack of the blades (36), and which is mounted to rotate in the hub (26) about the longitudinal axis of the corresponding blade (36),
characterized in that each blade (36) is individually connected to the hub (26) by the root part (42) of the spar (39), which is arranged in a loop surrounding, by its inner end, a single connection element (43) bolted on the hub (26), and in that the member (48) for controlling the angle of attack of each blade (36) is mounted for rotation in two coaxial circular openings (32, 33), each centered on the longitudinal axis of the corresponding blade (36) while being spaced apart radially from each other and each formed in one of two supports (30, 31) solidly connected to the hub.

2. The propeller according to claim 1, wherein each connection element (43) is axially traversed by the shank, with threaded end, of a single pin (67) for connecting the connection element (43) to an annular, flat, radial part (29) of the hub (26), surrounding a central opening made in the hub (26) to allow the coaxial arrangement of the hub (26) about the central shaft (11).

3. The propeller according to claim 1 or 2, characterized in that two rigid, radial flat rings (65, 66) are disposed on either side of the connection elements (43) of the blades (36) and about the central shaft (11), end each present for each connection element (43), a bore adapted to be aligned with the central passage of the corresponding connection element (43), and to receive the shank of the single pin for connecting the connection element (43) to the hub (26), in order to distribute the centrifugal forces from one connection element (43) to the other.

4. The propeller according to one of claims 1 to 3, characterized in that the hub (36) is in the form of a dish comprising two coaxial cylindrical walls (30, 31) radially spaced apart from each other and in each of which is pierced, for each blade (36), one of the two openings (32, 33), in each of which the member (48) controlling the angle of attack of the corresponding blade (36) is mounted to rotate via a self-lubricating ring (34, 35) coaxial to the opening in which the ring is housed.

5. The propeller as claimed in claim 4, characterized in that the internal diameters of the opening (33) made in the inner radial wall (31) of the hub (26) and of the self-lubricating ring (35) housed in this opening (33) are respectively less than the inner diameters of the opening (32) pierced in the outer radial wall (30) of the hub (26) and of the self-lubricating ring (34) housed in this opening (32), the member (48) controlling the angle of attack of the corresponding blade (36) presents two coaxial circular bearing surfaces (51, 52) centered on the longitudinal axis of the blade (36), radially spaced apart from one another so that by its outer radial bearing surface (51), of which the outer diameter corresponds to the inner diameter of the outer radial ring (34), and by its inner radial bearing surface (52), of which the outer diameter corresponds to the inner diameter of the inner radial ring (35), this member (48) abuts respectively inside the outer (34) and inner (35) radial rings.

6. The propeller as claimed in clain 5, characterized in that the member for controlling the angle of attack is a bearing in the form of a sleeve (48), traversed by the root part (42) of the spar (39) of the blade, covering the blade root (44) and connected to the latter, for example by gluing, and of which each of the ends is surrounded by one of the two bearing surfaces (51, 52).

7. The propeller as claimed in claim 6, characterized in that the blade root (44) comprises a hollow cylinder (46) whose inner end is truncated in form and a transition zone (47) connecting the hollow cylinder (46) to the shell (37) of the blade (36), the sleeve (48) comprises, an outer cylindrical part of large diameter surrounding the hollow cylinder (46) of the blade root (44) and connected by an intermediate truncated part, by which the sleeve (48) bears against the truncated inner end of the hollow cylinder (46), to an inner cylindrical part of small diameter.

8. The propeller acording to claim 7, characterized in that the two bearing surfaces are each constituted by one of two collars (51, 52) of spheroidal shape on the outer surface of the end of the sleeve (48) and in one piece with the latter which is nade of metal.

9. The propeller according to one of claims 5 to 8, wherein the member (48) controlling the angle of attack also comprises, between these two bearing surfaces (51, 52) a lateral boss (53) connected by a ball joint (62, 63) to one of the axial lugs (54), in a number equal to the number of blades (36) of the propeller, of a plate for controlling the angle of attack (55) displaced axially, parallel to the axis of rotation (A), by a shaft for collectively controlling the angle of attack (59) mounted to slide axially in the tubular central shaft (11).

10. The propeller according to claim 9, characterized in that the control plate (55) is an annular, convex plate connected to the shaft for collectively controlling the angle of attack (59) by a cheek (57) of truncated shape mounted on the letter by conical fit (58, 60).

11. The propeller according to one of claims 9 and 10, characterized in that each of the axial lugs (54) of the plate (55) presents a ringed bore (61) in which is received a ball joint (62) retained on a shank (63) fixed to the corresponding lateral boss (53).

12. The propeller according to one of claims 1 to 11, characterized in that it also comprises, a driving sleeve (17) adapted to transmit the driving torque from the central shaft (11) to the hub (26) and surrounding the central shaft (11) being coaxial to the latter and rotating with the latter and comprising an annular, outer radial flange (21) for connection to an annular radial part (29) of the hub (26).

13. The propeller according to claim 12, characterized in that the connection of the flange (21) of the driving sleeve (17) to the annular part (29) of the hub (26) is ensured by the pins (67) which, regularly distributed about the axis of rotation (A) and in a number equal to the number of blades (36) of the propeller, each simultaneously ensure retention, on the annular part (29) of the hub (26), of a connection element (43) of the root part (42) of the spar (39) of a blade (36) in cooperation with a nut (68) screwed on the thraded end of the shank of the pin (67) which passes through bores in the flange (21) and the annular part (29) of the hub (26) which are aligned with the central passage of the connection element (43).

14. The propeller according to one of claims 12 and 13, characterized in that the driving sleeve (17) is maintained in axial position about the central shaft (11) with the aid of a tapped ring (22) screwed at the end of the central shaft (11).

15. The propeller according to one of claims 12 to 14, characterized in that the central shaft (11) bears outer grooves (12), by which it is in mesh on the one hand with inner grooves on a bevel gear (14) and on the other hand with inner grooves on the driving sleeve (17), separated from the bevel gear (14) by a seal-holder (16), and an axial prestress device makes it possible to maintain a predetermined axial bearing force of the driving sleeve (17) against the seal-holder (16) and against the bevel gear (14).

16. The propeller according to claim 15 as associated with claim 14 characterized in that the prestress device may comprise screws (23), screwed in tappings passing through the ring (22) parallel to its axis, and of which the end of the shank of each is shaped as a bearing stud (24) applied against a bearing surface at the bottom of a notch (25) in the axial end face of the driving sleeve (17) which is opposite the seal-holder (16).

Fig.1

Fig.4

Fig.4a

_Fig.2_

_Fig. 3_

0 121 462